# EUROPEAN PATENT APPLICATION

(11) **EP 4 289 899 A1**
(43) Date of publication of application: **13.12.2023**
(21) Application number: 22749737.7
(22) Date of filing: 02.02.2022
(51) Int. Cl.: C08L 67/02, C08L 63/00, C08G 63/668, C08G 63/91

(54) **THERMOPLASTIC POLYESTER RESIN COMPOSITION, AND EXTRUSION-MOLDED ARTICLE COMPOSED THEREOF**

(30) Priority: 05.02.2021 JP 2021017777
(71) Applicant: TOYOBO MC Corporation, Osaka 530-0001 (JP)
(72) Inventor: YASUI Junichi, Otsu-shi, Shiga 520-0292 (JP); MORIO Eri, Otsu-shi, Shiga 520-0292 (JP); AKAISHI Takuya, Otsu-shi, Shiga 520-0292 (JP)
(74) Representative: Vossius & Partner Patentanwälte Rechtsanwälte mbB
(86) International application number: PCT/JP2022/004052
(87) International publication number: WO 2022/168866

(57) **Abstract**

The present invention aims to provide a thermoplastic polyester resin composition which has characteristic resin viscosity properties necessary for extrusion moldability, has excellent extrusion stability and extrusion moldability, and has flexibility optimal for in-vehicle tubes and hoses. According to the present invention, there is provided a thermoplastic polyester resin composition containing, relative to 100 parts by mass of a polyester resin component containing a polyester elastomer (a), 0.2 to 1.0 part by mass of a compound (b) having two epoxy groups, wherein the thermoplastic polyester resin composition has a z-average molecular weight Mz of 250000 or more and a Shore D hardness of 60 to 85.

## Description

### Technical Field of the Invention

The present invention relates to a thermoplastic polyester resin composition suitable for extrusion molding. The present invention relates in detail to a thermoplastic polyester resin composition having a characteristic wide molecular-weight distribution and thereby having remarkably good extrusion moldability.

### Background Art

Many hollow products are used for vehicle installation, such as a fuel tube and a brake hose. Metal tubes and metal hoses, which are of remarkably excellent quality, are used in important parts such as an engine peripheral component. Such metal tubes and metal hoses, however, increase the weight of a vehicle and become a demerit in fuel efficiency of the vehicle. They also have problems of high costs and poor continuous productivity.

Therefore, changing the material of in-vehicle tubes and hoses and the like from a metal to a resin is being studied. For example, fluororesins such as polytetrafluoroethylene are used as the material of fuel tubes because the fluororesins have excellent chemical resistance and stability. The fluororesins, however, are low in continuous productivity due to the properties thereof, are costly for a resin, and are therefore used only for special products.

On the other hand, rubber is conventionally used as a material of cheap general-purpose products. Similarly to the materials described above, however, rubber also has a large problem of poor continuous productivity due to the crosslinking-accompanying properties thereof.

Thermoplastic resins having a large merit in continuous productivity compared with the materials described above are being employed as the material of in-vehicle tubes and hoses. The thermoplastic resins can be continuously extrusion-molded after once melted, and therefore enable mass production.

As to a thermoplastic resin used for tubes and hoses, a thermoplastic polyester resin is selected that has excellent durability, such as heat resistance and oil resistance, corresponding to the properties required for the tubes and hoses. Further, in order to secure the dimensional stability of an extrusion-molded article and good extrusion moldability in performing extrusion molding, the viscosity properties of the resin is being improved and optimized. However, the viscosity properties particularly effective for extrusion molding has not been studied in detail.

For example, in Patent Document 1, achieving both flexibility and extrusion moldability has been studied by providing a branch in a resin skeleton. The study, however, is limited to a soft material, and detailed viscosity properties effective for extrusion molding has not been deeply studied.

In Patent Document 2, the use of an epoxy compound has been studied. The obtained composition, however, is studied in terms of crystalline melting point and Vicat softening point, and important viscosity properties for extrusion moldability has not been found.

In Patent Document 3, a composition effective for blow molding has been studied by using a polyfunctional epoxy compound in combination with a carbodiimide compound. The viscosity of the resin composition, however, has been excessively increased and is not suitable for exertion of good extrusion moldability.

### Prior Art Documents

### Patent Documents

Patent Document 1: Japanese Patent No. 4,907,779
Patent Document 2: Japanese Patent Application Laid-Open (JP-A) No. 2000-159985
Patent Document 3: WO 2018/174129

### Disclosure of the Invention

### Problem that the Invention is to Solve

An object of the present invention is to provide a thermoplastic polyester resin composition having characteristic resin viscosity properties necessary for extrusion molding, having excellent extrusion stability and extrusion moldability, and having flexibility optimal for in-vehicle tubes and hoses.

### Means for Solving the Problem

The inventors of the present invention have found that when a thermoplastic resin composition contains a polyester elastomer and a compound having two epoxy groups, that is, a difunctional epoxy compound, and has an increased z-average molecular weight Mz of 250000 or more, the z-average molecular weight Mz being an index of the viscosity of the resin composition, the thermoplastic resin composition exerts excellent dimensional stability during extrusion molding and has flexibility. Further, the inventors of the present invention have found that such a thermoplastic resin composition has excellent extrusion moldability and viscosity properties optimal for in-vehicle tubes and hoses, and have thus achieved the present invention.

Thus, the present invention is as follows.
[1] A thermoplastic polyester resin composition containing, relative to 100 parts by mass of a polyester resin component containing a polyester elastomer (a), 0.2 to 1.0 part by mass of a compound (b) having two epoxy groups, wherein the thermoplastic polyester resin composition has a z-average molecular weight Mz of 250000 or more and a Shore D hardness of 60 to 85.
[2] The thermoplastic polyester resin composition according to [1], wherein the polyester elastomer (a) is a block copolymer containing a hard segment and a soft segment bonded to each other, wherein the hard segment contains polyester that contains as constituent components an aromatic dicarboxylic acid component and aliphatic and/or alicyclic diol component, wherein the soft segment contains as a constituent component a polyalkylene glycol component, and wherein a content of the polyalkylene glycol component in the polyester resin component is 1 to 24 mass%.
[3] The thermoplastic polyester resin composition according to [1] or [2], wherein the thermoplastic polyester resin composition further contains 0.05 to 0.5 part by mass of a reaction promoter (c) relative to 100 parts by mass of the polyester resin component.
[4] The thermoplastic polyester resin composition according to any one of [1] to [3], wherein the thermoplastic polyester resin composition has a melt flow rate (in accordance with JIS K7210: 230°C) of 2 to 8 g/10 min.
[5] The thermoplastic polyester resin composition according to any one of [1] to [4], wherein the thermoplastic polyester resin composition is used for extrusion molding.
[6] An extrusion-molded article containing the thermoplastic polyester resin composition according to [5].

### Effects of the Invention

The thermoplastic polyester resin composition according to the present invention has characteristic resin viscosity properties necessary for extrusion moldability, has excellent extrusion stability and extrusion moldability, has flexibility optimal for in-vehicle tubes and hoses, and can be suitably used for these purposes of use.

### Mode for Carrying Out the Invention

The thermoplastic polyester resin composition of the present invention is a thermoplastic polyester resin composition containing, relative to 100 parts by mass of a polyester resin component containing a polyester elastomer (a), 0.2 to 1.0 part by mass of a compound (b) having two epoxy groups, wherein the thermoplastic polyester resin composition has a z-average molecular weight Mz of 250000 or more and a Shore D hardness of 60 to 85.

A main component of the thermoplastic polyester resin composition according to the present invention is a polyester resin component. The polyester resin component occupies preferably 70 mass% or more, more preferably 90 mass% or more, and particularly preferably 95 mass% or more of the thermoplastic polyester resin composition. The polyester resin component contains a polyester elastomer (a). By containing the polyester elastomer (a), the thermoplastic polyester resin composition according to the present invention can obtain flexibility necessary for in-vehicle extrusion-molded articles.

Preferably, the polyester elastomer (a) is a block copolymer containing a hard segment and a soft segment bonded to each other, wherein the hard segment contains polyester that contains as constituent components an aromatic dicarboxylic acid component and aliphatic and/or alicyclic diol component, and wherein the soft segment contains as a constituent component a polyalkylene glycol component.

The polyester elastomer (a) used in the present invention can be obtained by polymerization in a general polyester elastomer production method. Catalyst and the like during the polymerization are not particularly limited and a common catalyst can be used.

In the polyester elastomer (a) used in the present invention, the aromatic dicarboxylic acid component is not particularly limited. Examples of a main aromatic dicarboxylic acid include terephthalic acid. Examples of other aromatic dicarboxylic acid include isophthalic acid and naphthalene-2, 6-dicarboxylic acid. The aromatic dicarboxylic acid component may be a copolymer of two or more of these aromatic dicarboxylic acid components.

When total acid components constituting the polyester elastomer (a) are taken as 100 mol%, aromatic dicarboxylic acid occupies preferably 70 mol% or more, further preferably 80 mol% or more, and furthermore preferably 90 mol% or more.

When total acid components constituting the polyester elastomer (a) used in the present invention are taken as 100 mol%, terephthalic acid occupies preferably 70 mol% or more, more preferably 80 mol% or more, furthermore preferably 85 mol% or more, or may occupy 100 mol%.

As to an acid component constituting the polyester elastomer (a), an aliphatic dicarboxylic acid and/or an alicyclic dicarboxylic acid may also be used in an amount of 30 mol% or less.

In the polyester elastomer (a) used in the present invention, the aliphatic and/or alicyclic diol component is not particularly limited, but is desired to be mainly an alkylene glycol having 2 to 8 carbon atoms. Specific examples of such alkylene glycol include ethylene glycol, 1,3-propylene glycol, 1,4-butanediol, 1,6-hexanediol, and 1,4-cyclohexanedimethanol. Among these examples, either ethylene glycol or 1,4-butanediol is preferable for imparting heat resistance, and 1,4-butanediol is more preferable.

In the polyester elastomer (a) used in the present invention, the polyalkylene glycol component is preferably a polyalkylene glycol having a number average molecular weight of 500 to 3000. When the number average molecular weight is less than 500, the blocking properties of the polyester elastomer (a) tend to be decreased and the low-temperature properties tend to be lowered. On the other hand, when the number average molecular weight is more than 3000, the compatibility between the hard segment and the soft segment tends to be decreased and the physical properties tend to be lowered. The number average molecular weight is more preferably 800 to 2400, and furthermore preferably 800 to 2000. The number average molecular weight of the polyalkylene glycol can be calculated by quantitative determination of a terminal group.

In the polyester elastomer (a) used in the present invention, the hard segment preferably contains terephthalic acid as the aromatic dicarboxylic acid component, and polyester of 1,4-butanediol, that is, polybutylene terephthalate as the aliphatic and/or alicyclic diol component.

Further, in the polyester elastomer (a) used in the present invention, a general polyalkylene glycol can be used as the polyalkylene glycol component. Examples of such polyalkylene glycol include polyethylene glycol (PEG), polypropylene glycol (PPG), polytetramethylene glycol (PTMG), polyhexamethylene oxide glycol, and polyneopentyl glycol. A block copolymer of these polyalkylene glycols can also be used. General examples of the block copolymer include polyoxyethylene polyoxypropylene glycol (a copolymer of polyethylene glycol and polypropylene glycol), a copolymer of polyneopentyl glycol and polyethylene glycol, and an addition polymer obtained by adding ethylene oxide to a terminal of polypropylene glycol. Among these examples, polytetramethylene glycol is suitable for imparting heat resistance. These polyalkylene glycols and copolymers can be used in combination.

The polyester resin component in the present invention may only contain the polyester elastomer (a). In this case, only a single polyester elastomer may be used, or two or more polyester elastomers may be used.

As to the polyester resin component, a thermoplastic polyester resin other than the polyester elastomer (a) may be blended. In this case, the type of the thermoplastic polyester resin is not particularly limited, but the same thermoplastic polyester resin as the polyester constituting the hard segment of the polyester elastomer (a) is preferable, and polybutylene terephthalate is particularly preferable.

In any of the cases, the content of the polyalkylene glycol component of the polyester elastomer (a) in the polyester resin component of the present invention is preferably 1 to 24 mass% . The content of the polyalkylene glycol component is more preferably 3 to 22 mass%. When the content is less than 1 mass%, the flexibility of an extruded product may be decreased. When the content is more than 24 mass%, the crystallinity of the resin may be excessively decreased and oil resistance may possibly be decreased.

The thermoplastic polyester resin composition according to the present invention contains a compound (b) having two epoxy groups. Generally, a compound having two or more epoxy groups exhibits a molecular chain-extending effect through a reaction with an acid terminal of the polyester resin component containing the polyester elastomer (a). Therefore, such compound is used to increase the viscosity and the molecular weight of the thermoplastic polyester resin composition. The inventors of the present invention have found in earnest studies that only when the compound (b) having two epoxy groups is used, a unique high-molecular-weight component is produced. Particularly the compound (b) having two epoxy groups is considered to easily form a long-chain branch attributed to a secondary hydroxyl group. It is considered that a compound having three or more epoxy groups easily increases the number of branches due to the molecular structure thereof, but is less likely to produce a long-chain branch due to steric hindrance of the molecules.

The inventors of the present invention have also earnestly studied the blending amount of the compound (b) having two epoxy groups. The blending amount of the compound having two epoxy groups is preferably 0.2 part by mass or more and 1.0 part by mass or less, and more preferably 0.3 part by mass or more and 0.7 part by mass or less, relative to 100 parts by mass of the polyester resin component. When the blending amount is less than 0.2 part by mass, sufficient extrusion moldability cannot be obtained. When the blending amount is more than 1.0 part by mass, gelation proceeds and such a blending amount is thus inappropriate.

As to the compound (b) having two epoxy groups, various compounds can be used. As to the compound (b) having two epoxy groups, a compound having a molecular weight of 500 or less is preferable and a compound having a molecular weight of 150 to 400 is more preferable. Examples of such compound include diglycidyl diethylene glycol and a bisphenol F-type epoxy compound. It is also possible to combine, with the compound (b) having two epoxy groups, any compound having three or more epoxy groups, as far as the effects of the present invention are not impaired.

Further, the inventors of the present invention have found that the effect of improving extrusion moldability is attributed to the molecular weight of the thermoplastic polyester resin composition, particularly affected by Mz (z-average molecular weight: weighted average obtained by using the square of molecular weight as a weight), and that when the Mz is 250000 or more, the extrusion moldability is remarkably improved. The Mz is preferably 300000 or more and more preferably 350000 or more. The upper limit of the Mz is not particularly limited, but is preferably 800000 or less and more preferably 700000 or less. When the Mz is less than 250000, drawdown is caused during molding or the dimensional stability of a molded article is decreased. The Mz is measured by the method described in the section Examples described later.

In order to set the Mz of the thermoplastic polyester resin composition to within the above range, it is important to blend the compound (b) having two epoxy groups in a suitable amount depending on the compound, and use as necessary a reaction promoter (c) described later.

The thermoplastic polyester resin composition according to the present invention has, as the surface hardness thereof, a Shore D hardness of 60 or more and 85 or less, and preferably 65 or more and 82 or less. When the hardness is less than 60, the thermoplastic polyester resin composition may possibly generate a decrease of heat resistance and deformation due to its excessively low hardness. When the hardness is more than 85, the thermoplastic polyester resin composition may possibly generate a kink due to its excessively high hardness. The surface hardness (Shore D hardness) is measured by the method described in the section Examples described later.

As to the other types of molecular weight of the thermoplastic polyester resin composition, the weight average molecular weight Mw is preferably 100000 or more and more preferably 110000 or more. The Mw is preferably 150000 or less and more preferably 140000 or less. The number average molecular weight Mn is preferably 16000 or more. The Mn is preferably 20000 or less.

Further, the molecular-weight distribution represented by Mw/Mn is preferably 5.5 or more, and more preferably 6.0 or more, so as to have a great influence of a high-molecular-weight component. The Mw/Mn is preferably 8.5 or less.

The molecular weight can be increased by promoting the reaction between an epoxy group and an acid terminal of the polyester resin component. For that purpose, the thermoplastic polyester resin composition preferably contains 0.05 part by mass or more and 0.5 part by mass or less of the reaction promoter (c) relative to 100 parts by mass of the polyester resin component. The content of the reaction promoter (c) is more preferably 0.05 part by mass or more and 0.4 part by mass or less, furthermore preferably 0.05 part by mass or more and 0.3 part by mass or less, and particularly preferably 0.15 part by mass or more and 0.3 part by mass or less.

As to the reaction promoter (c) for an epoxy group and an acid terminal, a common promoter can be used. Examples of the promoter include a phenylimidazoline-based promoter, a triphenylphosphine-based promoter, a phosphonium metal salt-based promoter, and an alkali metal salt-based promoter. Among these examples, either a phenylimidazoline-based promoter or a triphenylphosphine-based promoter is preferable. Particularly, a phenylimidazoline-based promoter also contributes to a reaction between epoxy groups, whereby a unique high-molecular-weight component is produced. Accordingly, a phenylimidazoline-based promoter has a great effect of increasing the molecular weight of the thermoplastic polyester resin composition.

From the viewpoint of flowability related to extrusion stability, the thermoplastic polyester resin composition preferably has a melt flow rate of 2 g/10 min or more and 8 g/10 min or less, more preferably 3 g/10 min or more and 8 g/10 min or less, and furthermore preferably 4 g/10 min or more and 8 g/10 min or less. When the melt flow rate is less than 2 g/10 min, the flowability may be excessively low and the product appearance may be degraded due to melt fracture. When the melt flow rate is more than 8 g/10 min, the flowability may be excessively high and good extrusion stability may not be obtained. The melt flow rate is measured by the method described in the section Examples described later.

In the present invention, the the technique of increasing the molecular weight (thickening) of the polyester resin component is not particularly limited. Examples of the technique include a method for blending the reaction promoter (c) as described above and performing melt kneading extrusion. Alternatively, a method using solid-phase polymerization is also applicable.

For example, in the cases of melt kneading extrusion with use of a co-rotating twin-screw extruder, melt kneading is performed, with the temperature of a cylinder set to 250°C, and the obtained strand is water-cooled and formed into pellets.

The thermoplastic polyester resin composition according to the present invention can also be used as a resin composition in which various additives described later have been blended. In the thermoplastic polyester resin composition according to the present invention, the polyester resin component containing the polyester elastomer (a) and the compound (b) having two epoxy groups are present in a state after being reacted to each other. The thermoplastic polyester resin composition may also contain an unreacted portion of the polyester resin component, an unreacted portion of the compound (b) having two epoxy groups, the reaction promoter (c), and various additives.

It is preferred to blend in the thermoplastic polyester resin composition according to the present invention a general-purpose antioxidant such as an aromatic amine-based antioxidant, a hindered phenol-based antioxidant, a phosphorus-based antioxidant, and a sulfur-based antioxidant. The antioxidant may be blended in the stage of polymerization, or may be blended through melt kneading extrusion after the polyester resin component is obtained.

It is possible to blend other various additives in the thermoplastic polyester resin composition according to the present invention. As to such additives, a resin other than polyester, an inorganic filler, a stabilizer, and an anti-aging agent can be added as far as the effects of the present invention are not impaired.

In addition, as to another additive, a mold release agent, a coloring pigment, an inorganic or organic filler, a coupling agent, a tackifier, a quencher, a stabilizer such as a metal deactivator, a flame retardant, or the like can also be added.

The thermoplastic polyester resin composition according to the present invention can be molded into in-vehicle tubes and hoses by extrusion molding.

### Examples

In order to illustrate the present invention in detail, Examples will be shown below although the present invention shall not be limited at all by those Examples. Incidentally, each of the measured values mentioned in Examples was measured by the following methods.

Melt flow rate (MFR):
The melt flow rate was measured using Melt Indexer F-B01 (manufactured by Toyo Seiki Seisaku-sho, Ltd.) in accordance with JIS K7210 at a load of 2160 g and a measurement temperature of 230°C. The unit is "g/10 min".

Melting point:
The melting point was defined as an endothermic peak temperature obtained in accordance with the test method described in JIS K7121, using V4.0B2000 differential scanning calorimeter manufactured by DuPont de Nemours, Inc., in an argon atmosphere, and at a sample mass of 10 mg, a heating start temperature of 30°C, and a temperature rise rate of 20°C/min.

Surface hardness (Shore D hardness):
The surface hardness was measured in accordance with the test method (Shore D) described in ASTM D2240 in an environment temperature of 23°C. An injection-molded article (width 100 mm, length 100 mm, thickness 2.0 mm) was prepared, with the temperature of a cylinder set to be higher than the melting point of the resin (or the resin composition) by 20°C, and the temperature of a mold set to 50°C. The surface hardness of a layered product of three injection-molded articles was measured by reading a momentary value of Shore D when a needle tip was dropped onto the surface of the layered product.

Z-average molecular weight, weight average molecular weight, and number average molecular weight:
The above-mentioned types of average molecular weight of the resin composition were measured as follows. The resin composition was weighed in an amount of 16 mg, dissolved in 8 ml of chloroform, and then filtered with a 0.2-µm membrane filter to give a sample solution, and the sample solution was subjected to gel permeation chromatography.

The molecular weight was calculated in terms of standard polystyrene.

The measurement was performed using device HLC-8320GPC manufactured by TOSOH Corporation, using, as the solvent, a mixed solvent of chloroform/hexafluoroisopropanol at a ratio of 98/2 (volume ratio), under the conditions of a flow rate of 0.6 ml/min, a concentration of 0.05%, an injected amount of 20 µl, a temperature of 40°C, and detector UV of 254 nm.

Evaluation of extrusion moldability:
Extrusion molding was performed, with the temperature of a cylinder of a single-screw extruder (L/D = 28, full flight screw, screw diameter 30 mm) set to the MFR measurement temperature. The following evaluations of moldability (product appearance, drawdown, and dimensional stability) were determined by the criteria described below.

A T-die (die clearance: 1.5 mm) was used as a die.

### Product appearance

∘∘: The product has remarkably good appearance with a remarkably flat and smooth surface.
∘: The product has good appearance with few irregularities on the surface.
Δ: The product has irregularities and/or wave patterns on the surface.
×: The product has many irregularities and/or wave patterns patterns on the surface, and has no gloss on the surface.

### Drawdown

∘∘: The resin composition causes remarkably small drawdown and retains the shape for a long time.
∘: The resin composition causes small drawdown and retains the shape.
Δ: The resin composition causes large drawdown, nearly collapsing the shape but still enabling extrusion molding.
×: The resin composition causes very large draw down, collapsing the shape and thus enabling no extrusion molding.

### Dimension stability

∘∘: The product has uniform thickness and has remarkably stable dimension.
∘: The product has slightly ununiform thickness and has stable dimension.
Δ: The product has severely ununiform thickness and has unstable dimension.
×: The product has further severely ununiform thickness and has remarkably unstable dimension.

The blended components used in the examples and the comparative examples are as follows.

### [Polyester elastomer (a)]

### (a-1) Polyester elastomer:

A polyester elastomer resin having a ratio of terephthalic acid//1,4-butanediol/polytetramethylene glycol (PTMG, number average molecular weight 1000, manufactured by Mitsubishi Chemical Corporation) of 100//93/7 (mol%) was produced in accordance with the method described in "Japanese Patent Application Laid-Open (JP-A) No. 59491/97". This polyester elastomer has a mass ratio of the PTMG of 24.9 mass%, a melting point of 212°C, a reduced viscosity of 1.52 dl/g, and a surface hardness of 57D.

### (a-2) Polyester elastomer:

A polyester elastomer resin having a ratio of terephthalic acid//1,4-butanediol/polytetramethylene glycol (PTMG, number average molecular weight 1000, manufactured by Mitsubishi Chemical Corporation) of 100//81/19 (mol%) was produced in accordance with the method described in "Japanese Patent Application Laid-Open (JP-A) No. 59491/97". This polyester elastomer has a mass ratio of the PTMG of 48.8 mass%, a melting point of 172°C, a reduced viscosity of 1.82 dl/g, and a surface hardness of 44D.

### (a-3) Polyester elastomer:

A polyester elastomer resin having a ratio of terephthalic acid//1,4-butanediol/polytetramethylene glycol (PTMG, number average molecular weight 1000, manufactured by Mitsubishi Chemical Corporation) of 100//96/4 (mol%) was produced in accordance with the method described in "Japanese Patent Application Laid-Open (JP-A) No. 59491/97". This polyester elastomer has a mass ratio of the PTMG of 15.3 mass%, a melting point of 217°C, a reduced viscosity of 1.33 dl/g, and a surface hardness of 68D.

### [Compound (b) having epoxy groups]

(b-1) Diglycidyl diethylene glycol (DENACOL EX-850, manufactured by Nagase ChemteX Corporation, containing two epoxy groups, molecular weight: 218)
(b-2) Bisphenol F-type epoxy resin (EPICLON 830, manufactured by DIC Corporation, containing two epoxy groups, molecular weight: 330 to 354)
(b-3) Tris(2,3-epoxypropyl)isocyanurate (TEPIC-S, manufactured by Nissan Chemical Corporation, containing three epoxy groups)
(b-4) Polyfunctional glycidyl group-containing styrene acrylic polymer (UG-4050, manufactured by TOAGOSEI CO., LTD., containing many epoxy groups)

### [Reaction promoter (c)]

(c-1) 2-Phenylimidazoline (CUREZOL 2PZL, manufactured by SHIKOKU KASEI HOLDINGS CORPORATION)
(c-2) Triphenylphosphine (manufactured by NACALAI TESQUE, INC.)
(c-3) Quaternary phosphonium bromide (U-CAT5003, manufactured by San-Apro Ltd.)
(c-4) Sodium stearate (manufactured by NACALAI TESQUE, INC.)

### [Other polyester resin component (d)]

(d-1) Polybutylene terephthalate resin: IV (intrinsic viscosity) = 1.28 dl/g, acid value = 40 eq/ton, melting point = 225°C

### Examples 1 to 9 and Comparative Examples 1 to 8

Thermoplastic polyester resin compositions were prepared at the composition ratios described in Tables 1 and 2. The thermoplastic polyester resin compositions were each melt-kneaded using twin-screw kneading extruder TEM-35B (manufactured by SHIBAURA MACHINE CO., LTD.) at a cylinder-setting temperature of 250°C, a discharge rate of 15 kg/hr, and a screw rotation speed of 100 rpm, and formed into pellets.

The evaluations of the obtained thermoplastic polyester resin compositions were conducted. Tables 1 and 2 show the evaluation results.

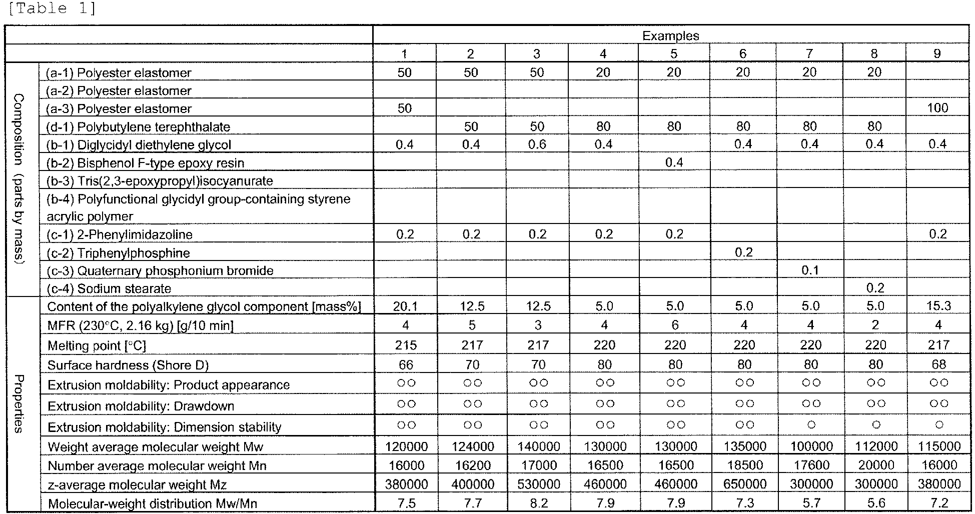

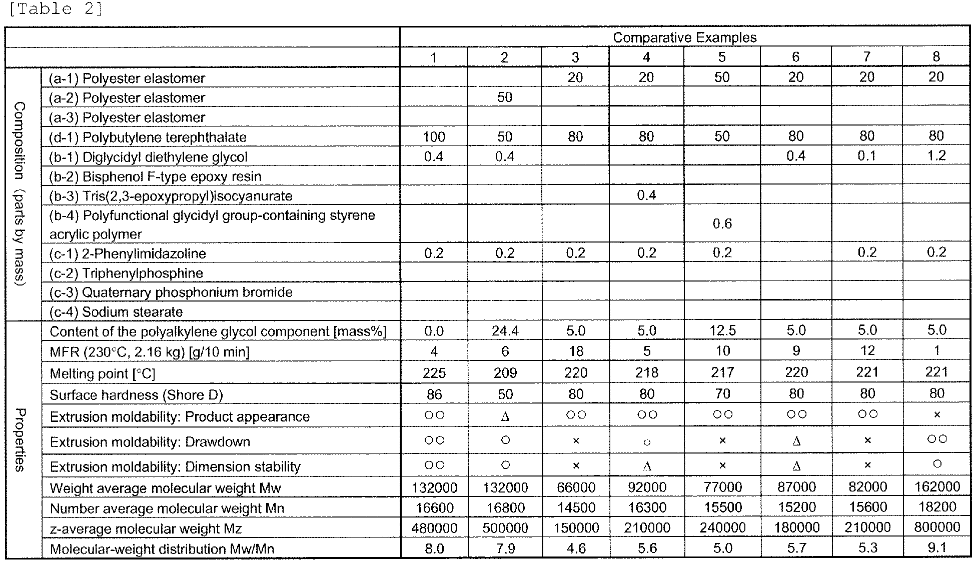

Examples 1 to 9 are examples of the thermoplastic polyester resin composition that contains the polyester elastomer (a) and the compound (b) having two epoxy groups, and has a z-average molecular weight Mz of 250000 or more. Examples 1 to 9 satisfy the surface hardness that is important in terms of a product. Therefore, Examples 1 to 9 have sufficient product strength and have remarkably good extrusion moldability.

Comparative Examples 1 to 8 are examples that do not satisfy sufficient properties in terms of extrusion moldability and product properties.

Comparative Example 1 does not contain any polyester elastomer. Comparative Example 1 has high surface hardness, and does not follow a curve of a product, while having excellent extrusion moldability.

Comparative Example 2 has low surface hardness contrary to Comparative Example 1. Comparative Example 2 allows flexure and cannot retain the shape of a product when the product has an elongated shape. The heat resistance of a product may possibly be decreased.

Comparative Example 3 does not contain any compound having epoxy groups, and has a high MFR and a remarkably small z-average molecular weight. Therefore, although giving good appearance, Comparative Example 3 too easily causes drawdown and has remarkably low dimensional stability.

Comparative Examples 4 and 5, which are examples containing a compound having three or more epoxy groups, have a low z-average molecular weight and therefore has insufficient extrusion moldability.

Comparative Example 6, in which the z-average molecular weight of the polyester resin component is not sufficiently increased, has poor extrusion moldability.

Comparative Example 7, in which the added amount of the compound having two epoxy groups is small, cannot obtain a sufficiently high z-average molecular weight and has poor extrusion moldability.

In Comparative Example 8, the added amount of the compound having two epoxy groups is too much. Due to an excessive progress of resin thickening caused by the compound having epoxy groups, the molecular weight of the thermoplastic polyester resin composition is excessively increased. As a result, a gelled product is produced and melt fracture is generated during extrusion molding. The product thereby has no surface flatness and smoothness, has inferior appearance, and does not satisfy the product properties.

### Industrial Applicability

The thermoplastic polyester resin composition according to the present invention is remarkably excellent for extrusion molding of resin tubes and hoses. Therefore, the resin composition according to the present invention is applicable to in-vehicle hollow components presumed to be further increased in the future and greatly contributes to the industry.

## Claims

1. A thermoplastic polyester resin composition containing, relative to 100 parts by mass of a polyester resin component containing a polyester elastomer (a), 0.2 to 1.0 part by mass of a compound (b) having two epoxy groups, wherein the thermoplastic polyester resin composition has a z-average molecular weight Mz of 250000 or more and a Shore D hardness of 60 to 85.

2. The thermoplastic polyester resin composition according to claim 1, wherein the polyester elastomer (a) is a block copolymer containing a hard segment and a soft segment bonded to each other, wherein the hard segment contains polyester that contains as constituent components an aromatic dicarboxylic acid component and aliphatic and/or alicyclic diol component, wherein the soft segment contains as a constituent component a polyalkylene glycol component, and wherein a content of the polyalkylene glycol component in the polyester resin component is 1 to 24 mass%.

3. The thermoplastic polyester resin composition according to claim 1 or 2, wherein the thermoplastic polyester resin composition further contains 0. 05 to 0.5 part by mass of a reaction promoter (c) relative to 100 parts by mass of the polyester resin component.

4. The thermoplastic polyester resin composition according to any one of claims 1 to 3, wherein the thermoplastic polyester resin composition has a melt flow rate (in accordance with JIS K7210: 230°C) of 2 to 8 g/10 min.

5. The thermoplastic polyester resin composition according to any one of claims 1 to 4, wherein the thermoplastic polyester resin composition is used for extrusion molding.

6. An extrusion-molded article containing the thermoplastic polyester resin composition according to claim 5.
